# EUROPÄISCHE PATENTSCHRIFT

(11) **EP 0 527 368 B1**
(45) Veröffentlichungstag und Bekanntmachung des Hinweises auf die Patenterteilung: **05.04.1995**
(21) Anmeldenummer: 92112566.2
(22) Anmeldetag: 22.07.1992
(51) Int. Cl.: H01R 4/64

(54) **Kabeldurchführungsvorrichtung**
Cable feedthrough device
Dispositif pour traversée de câble

(30) Priorität: 13.08.1991 DE 9110007 U
(43) Veröffentlichungstag der Anmeldung: 17.02.1993
(73) Patentinhaber: W.L. Gore & Associates GmbH, 85636 Putzbrunn (DE)
(72) Erfinder: Guiol, Eric, D-91785 Pleinfeld (DE); Röckl, Helmut, D-91785 Pleinfeld (DE); Buckel, Konrad, D-91781 Weissenburg (DE)
(74) Vertreter: Klunker . Schmitt-Nilson . Hirsch

(56) Entgegenhaltungen:
- EP-A- 0 293 042
- CA-A- 969 846
- US-A- 4 487 995
- US-A- 4 547 623

## Beschreibung

Die Erfindung betrifft eine Kabeldurchführungsvorrichtung zur elektromagnetisch dichten Durchführung eines geschirmten elektrischen Kabels mit im Durchführungsbereich von einem Kabelmantel freigelegtem elektrischem Schirm durch eine Trennwandöffnung, mit mindestens zwei in radialer Richtung an den freigelegten Bereich des Schirms ansetzbaren, elektrisch leitenden Teilschalen, deren Innenprofil an das Außenprofil des Schirms angepaßt ist, und mit einer Befestigungseinrichtung zum Befestigen der Kabeldurchführungsvorrichtung in der Trennwandöffnung.

Eine Kabeldurchführungsvorrichtung dieser Art ist aus der DE-C-29 09 890 bekannt. Die bekannte Vorrichtung dient zur Abschirmung hochfrequenter elektrischer und elektromagnetischer Wellen bei dichten Durchführungen für Leitungsbündel durch eine band. Diese Vorrichtung besitzt einen in eine Wandöffnung eingesetzten Rahmen, in dem mehrere, in etwa matrixartig angeordnete Füllstücke untergebracht sind. Die Füllstücke sind dort, wo Kabel durch den Rahmen hindurchgeführt werden sollen, durch Paßstücke aus je zwei Paßstückhälften gebildet, zwischen denen eine Öffnung zur Aufnahme des durch den Rahmen hindurchzuführenden Kabels vorgesehen ist. In dem innerhalb des Rahmens befindlichen Bereich liegt der elektrische Schirm des Kabels frei. Die Paßstückhälften umfassen das durch sie hindurchragende Kabel, wobei sie im Bereich des freigelegten Schirms einen radialen Vorsprung aufweisen, derart, daß der radiale Vorsprung an dem freigelegten Kabelschirm und die beidseits des radialen Vorsprungs befindlichen Endbereiche der Paßstückhälften am Kabelmantel anliegen. Die Paßstücke und die Füllstücke sind je aus elastischem Material gebildet, in das Aluminiumpartikel eingelagert sind. In der Mitte der Matrix aus Füllstücken und Paßstücken befindet sich ein Klemmstück aus elastischem Material, das mittels eines Schraubenbolzens und damit zusammenwirkender Anpreßplatten in Axialrichtung des Bolzens zusammengespreßt und damit in Radialrichtung auseinandergedrückt werden kann, um die Füllstücke und die Paßstücke in dem Rahmen und an den Kabeln festzuklemmen.

Diese bekannte Durchführungsvorrichtung ist aufwendig von der Anzahl der Teile und Montage her und entsprechend kostenintensiv. Besonders dann, wenn nur ein einziges Kabel durch eine Trennwandöffnung hindurchzuführen ist, ist der Aufwand für die Durchführungsvorrichtung nicht vertretbar. Eine Vormontage dieser Durchführungsvorrichtung beim Kabelhersteller oder Kabelkonfektionär ist nicht möglich. Möchte man den Kosten- und Platzaufwand für den Schraubenbolzen, die Anpreßplatten und das damit zusammenwirkende elastische Preßstück vermeiden, läßt sich aufgrund üblicher Herstellungstoleranzen nicht sicherstellen, daß die beiden Paßstückhälften den freigelegten Kabelschirm lückenlos umschließen, so daß mit elektromagnetisch undichten Stellen und damit einhergehenden elektromagnetischen Störungen gerechnet werden muß.

Aus dem DE-U-77 21 692 ist eine Tülle für eine feuersichere und gasdichte Durchführung eines Kabels durch Mauern bekannt. Die Tülle besteht aus zwei in Längsrichtung getrennten Tüllenteilen, die aus einem elastischen, durch Hitzeeinwirkung quellenden Werkstoff bestehen. An ihrem Innenumfang sind die Tüllenhälften zwischen ihren Längsenden mit einer wannenartigen Vertiefung versehen, welche mit einem Dichtungsmaterial, beispielsweise Kautschuk, ausgefüllt ist.

Aus der DE-A-25 58 885 ist eine Leitungseinführung an Installationsgehäusen bekannt, die in eine Gehäusewandöffnung eingesetzte, plattenförmige Flansche aufweist, in die die Leitungen durch die Gehäusewand durchführende, die Leitungen umschließende Dichtungskörper eingesetzt sind. Die Dichtungskörper sind in Form von aneinander ansetzbaren Halbschalen längsgeteilt. Sie werden mittels in tangentialer Richtung angeordneter Kupplungsstücke und durch äußere Sicherungsringe aneinandergehalten. Die Dichtungsringe, die zudem aus Kunststoff bestehen, erlauben keine elektrische Kontaktierung eines freigelegten Kabelschirms. Die bekannte Lösung erlaubt keine elektromagnetisch dichte Durchführung durch eine Trennwandöffnung.

Der Erfindung liegt die Aufgabe zugrunde, eine Kabeldurchführungsvorrichtung der eingangs angegebenen Art so zu verbessern, daß sie mit wenigen, kostengünstigen Bauteilen auskommt, sich beim Kabelhersteller oder Kabelkonfektionär an einem beiden Endes mit elektrischen Verbindern versehenen Kabel vormontieren läßt und zu elektromagnetischer Dichtigkeit führt.

Die Lösung dieser Aufgabe besteht in einer Kabeldurchführungsvorrichtung der eingangs angegebenen Art, bei welcher das Außenprofil der Teilschalen im wesentlichen mit dem Außenprofil des Kabelmantels übereinstimmt, bei welcher die Teilschalen von einer elektrisch leitenden Hülse umgeben sind, deren Innenprofil derart an das Außenprofil des Kabelmantels und der Teilschalen angepaßt ist, daß die Hülse auf dem Kabelmantel und auf dem an den freigelegten Bereich des Schirms angesetzten Teilschalen in Kabellängsrichtung verschiebbar ist, bei welcher auf dem Außenumfang der Hülse beidseits der axialen Trennwandposition je ein elektrisch leitendes Scheibenelement angeordnet ist, von denen mindestens eines als bezüglich der Hülse bewegliche Ringscheibe ausgebildet ist, die zum radialen Aufsetzen auf die Hülse mit einem Radialschlitz versehen ist, dessen Breite mindestens so groß ist wie die Außenabmessung des die Ringscheibe tragenden Hülsenbereichs, bei welcher die Hülse mindestens auf derjenigen axialen Seite der Trennwandposition, auf welcher die Ringscheibe vorgesehen ist, mit einem Außengewinde für mindestens eine Gewindemutter versehen ist, und bei welcher die Außenabmessungen der beiden Scheibenelemente größer und die Außenabmessungen mindestens der mit Außengewinde versehenen axialen Seite der Hülse einschließlich der darauf geschraubten Gewindemutter kleiner als die Abmessungen der Trennwandöffnung sind.

Vorteilhafte Weiterbildungen dieser Kabeldurchführungsvorrichtung sind in den Ansprüchen 2 bis 6 angegeben.

Die Erfindung macht außerdem eine Kabelbaugruppe mit einem geschirmten elektrischen Kabel und je einem elektrischen Verbinder an jedem Kabelende verfügbar, wobei an einer zwischen den Kabelenden liegenden Kabelstelle der Schirm vom Kabelmantel freigelegt und das Kabel an dieser Stelle mit einer erfindungsgemäßen Kabeldurchführungsvorrichtung versehen ist, wobei die Abmessungen der Trennwandöffnung und die Abmessungen mindestens desjenigen Verbinders, welcher auf der gleichen Trennwandseite wie die Ringscheibe vorgesehen ist, in solchem Verhältnis zueinander stehen, daß dieser Verbinder durch die Trennwandöffnung hindurchführbar ist.

Vorzugsweise werden die Teilschalen und, in besonders bevorzugter Weise, auch die Hülse miteinander verlötet, um eine besonders gute elektromagnetische Dichtigkeit zu erhalten.

Die erfindungsgemäße Kabeldurchführungsvorrichtung erlaubt eine Vormontage beim Kabelhersteller oder Kabelkonfektionär. Dort wird das elektrische Kabel auf die erforderliche Länge gebracht. An derjenigen Längsstelle des Kabels, die später durch die Trennwandöffnung hindurchgeführt wird, wird zur Freilegung des Kabelschirms der Kabelmantel auf eine bestimmte Länge entfernt. An den freigelegten Kabelschirm werden dann die elektrisch leitenden Teilschalen, vorzugsweise Halbschalen, angesetzt. Die Außenseiten der Halbschalen schließen dabei bündig mit dem Kabelmantel des restlichen Kabels ab. Daraufhin wird von einem Kabelende her die Hülse über den Kabelmantel bis auf die Teilschalen geschoben. Vorzugsweise erfolgt ein Verlöten des Kabelschirms mit den Teilschalen, in besonders bevorzugter Weise auch mit der Hülse. Von demjenigen Kabelende her, das auf der Seite der an die Hülse ansetzbaren Ringscheibe liegt, wird dann mindestens eine Gewindemutter, vorzugsweise zusätzlich eine Kontermutter, aufgeschoben und auf das Außengewinde der Außenhülse aufgeschraubt. Danach werden dann die beiden elektrischen Verbinder an die Kabelenden anmontiert.

Das derart konfektionierte Kabel wird dann an seinen Einsatzort gebracht, wo es dann beispielsweise in eine elektromagnetisch abgeschirmte Geräte-, Fahrzeug- oder Flugzeugzelle eingebaut wird. Zur Durchführung durch eine Trennwandöffnung der Zelle und zur Montage in einer Trennwandöffnung der Trennwand wird dann die Kabelbaugruppe mit demjenigen elektrischen Verbinder voraus durch die Trennwandöffnung geführt, welcher sich auf der Seite der Gewindemutter befindet. Die Ringscheibe ist dabei nicht an die Hülse der Kabeldurchführungsvorrichtung angesetzt. Das Kabel der Kabelbaugruppe wird soweit durch die Trennwandöffnung hindurchgeführt, daß das nicht als Ringscheibe ausgebildete, vorzugsweise mit der Hülse eine einstückige Einheit bildende Scheibenelement an dem die Trennwandöffnung umgebenden Wandbereich der Trennwand anliegt. Danach wird auf der entgegengesetzten Trennwandseite die Ringscheibe unter Ausnutzung ihres Radialschlitzes in Radialrichtung auf die Hülse aufgesetzt. Danach wird die Gewindemutter in Richtung auf die Trennwand zu geschraubt, wodurch die Ringscheibe in Richtung auf das auf der anderen Trennwandseite befindliche Scheibenelement hin bewegt wird, unter Festklemmung des die Trennwandöffnung umgebenden Trennwandbereichs zwischen den beiden Scheibenelementen.

Dadurch, daß die Trennwand, die bei elektromagnetisch dichten Zellen aus elektrisch leitendem Metall besteht, mit dem freigelegten Kabelschirm elektrisch verbunden ist, und zwar über die elektrisch leitenden Scheibenelemente, die elektrisch leitende Hülse und die elektrisch leitenden Teilschalen, wobei die Scheibenelemente die Trennwandöffnung vollständig abdecken, ist eine elektromagnetisch vollständig dichte Kabeldurchführung erreicht. Daher führt die Erfindung zu einer EMV-gerechten Kabeldurchführung, d.h. einer elektromagnetisch Verträglichen Kabeldurchführung.

Die Erfindung, weitere Ausgestaltungen der Erfindung sowie weitere Aufgaben- und Vorteilsaspekte der Erfindung werden nun anhand einer Ausführungsform näher erläutert. In den Zeichnungen zeigen:
- Figur 1: ein Kabelstück mit einer daran angeordneten erfindungsgemäßen Kabeldurchführungsvorrichtung, wobei eine Trennwand angedeutet ist;
- Figur 2: eine Seitenansicht der Kabeldurchführungsvorrichtung, in Figur 1 von rechts gesehen, ohne Trennwand;
- Figur 3: eine Vorderansicht einer Halbschale der Kabeldurchführungsvorrichtung nach Figur 1;
- Figur 4: eine Seitenansicht der in Figur 3 gezeigten Halbschale;
- Figur 5: eine Längsseitenansicht einer Hülse der Kabeldurchführungsvorrichtung in Figur 1;
- Figur 6: eine Vorderansicht der Hülse, in Figur 5 von rechts aus gesehen;
- Figur 7: eine Draufsicht auf eine Ringscheibe der Kabeldurchführungsvorrichtung in Figur 1;
- Figur 8: eine Seitenansicht der Ringscheibe; und
- Figur 9: ausschnittsweise Teile einer Kabelbaugruppe mit einer Kabeldurchführungsvorrichtung gemäß Figur 1.

Die Darstellungen in den Zeichnungen sind zueinander nicht alle maßstabsgleich.

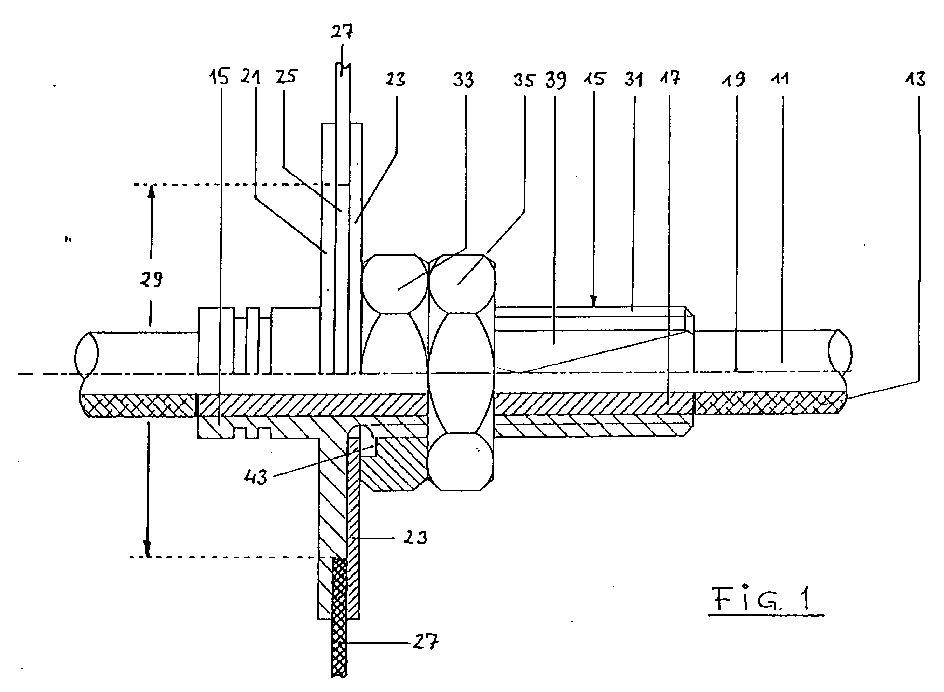

Figur 1 zeigt ein Kabel 11 in Form eines Koaxialkabels mit einem (nicht gezeigten) schlauchartigen elektrischen Schirm und einem darüber befindlichen Kabelmantel 13. Auf dem Kabelmantel befindet sich eine Hülse 15 aus elektrisch leitendem Material, vorzugsweise elektrisch gut leitendem Metall. Wie in Figur 1 angedeutet ist, ist der Kabelmantel 13 über eine Länge gleich der Länge der Hülse 15 entfernt, um den Schirm des Kabels 13 freizulegen. In diesem Bereich sind an den Schirm zwei Halbschalen 17 aus elektrisch leitendem Material, vorzugsweise aus elektrisch gut leitendem Metall, angesetzt. In Figur 1, welche die erfindungsgemäße Kabeldurchführungsvorrichtung und das Kabel 11 oberhalb einer Kalbellängsachse 19 in Längsseitenansicht und unterhalb der Kabellängsachse 19 in Schnittansicht zeigt, ist nur eine untere Halbschale 17 zu sehen. Wie der Zeichnung entnehmbar ist, weist die Halbschale 17 die gleiche Länge wie die Hülse 15 auf. Ihre radiale Dicke ist gleich groß wie die radiale Dicke des Kabelmantels 13, den sie im Bereich der Hülse 15 ersetzt. Das heißt, die Halbschale 17 schließt auf ihrer Innenseite mit dem freigelegten Schirm und auf ihrer Außenseite mit dem Kabelmantel 13 bündig ab. Die Hülse 15 weist einen Innendurchmesser gleich dem Außendurchmesser des Kabelmantels 13 und damit gleich dem Außendurchmesser der Halbschalen 17 auf. Die Hülse 15 kann daher von einem Längsende des Kabels 11 über dessen Kabelmantel 13 und über die Halbschalen 17 geschoben werden.

Die Halbschalen 17 können vor oder nach dem Aufschieben der Hülse 15 mit dem freigelegten Schirm des Kabels 11 verlötet werden. Vorzugsweise wird dabei auch die Hülse 15 mit den Halbschalen 17 verlötet. Dies führt zu einem besonders innigen elektrischen Kontakt zwischen dem Schirm des Kabels 11, den Halbschalen 17 und der Hülse 15.

Die Kabeldurchführungsvorrichtung weist zwei Scheibenelemente auf, nämlich eine bei der dargestellten Ausführungsform mit der Hülse 15 einstückig ausgebildeten Abdeckscheibe 21 und eine als bezüglich der Hülse 15 separates Bauelement ausgebildete Ringscheibe 23. Die Abdeckscheibe 21 weist einen axialen Ansatz 25 auf, der einen kleineren Außendurchmesser als die Abdeckscheibe 21 aufweist. Die Dicke und der Außenumfang des axialen Ansatzes 25 entsprechen der Dicke einer Trennwand 27 bzw. der Form einer in der Trennwand 27 gebildeten Trennwandöffnung 29.

Der in Figur 1 rechts von der Abdeckscheibe 21 befindliche Bereich der Hülse 15 ist auf seiner Außenseite mit einem Außengewinde 31 versehen, auf das eine Gewindemutter 33 und eine Kontermutter 35 aufgeschraubt sind. Mit der Gewindemutter 33 kann die Ringscheibe 23 gegen die Abdeckscheibe 21 gespannt werden, mit dazwischen befindlicher Trennwand 27, um die Kabeldurchführungsvorrichtung an der Trennwand 27 festzulegen. Mit der Kontermutter 35 wird die Festhaltestellung der Gewindemutter 33 gesichert.

Wie Figur 1 zeigt, sind die Außendurchmesser des mit Außengewinde 31 versehenen Teils der Hülse 15, der Gewindemutter 33 und der Kontermutter 35 kleiner als der Durchmesser der Trennwandöffnung 29, während der Außendurchmesser der Abdeckscheibe 21 und der Ringscheibe 23 größer ist als die Trennwandöffnung 29. Daher läßt sich die auf dem Kabel 11 montierte Kabeldurchführungsvorrichtung bei abgenommener Ringscheibe 23 durch die Trennwandöffnung 29 hindurchführen, bis der über den axialen Ansatz 25 hinausragende Außenbereich der Abdeckscheibe 21 an der in Figur 1 linken Seite der Trennwand 27 anliegt. Der axiale Ansatz 25 füllt dann die Trennwandöffnung 29 aus.

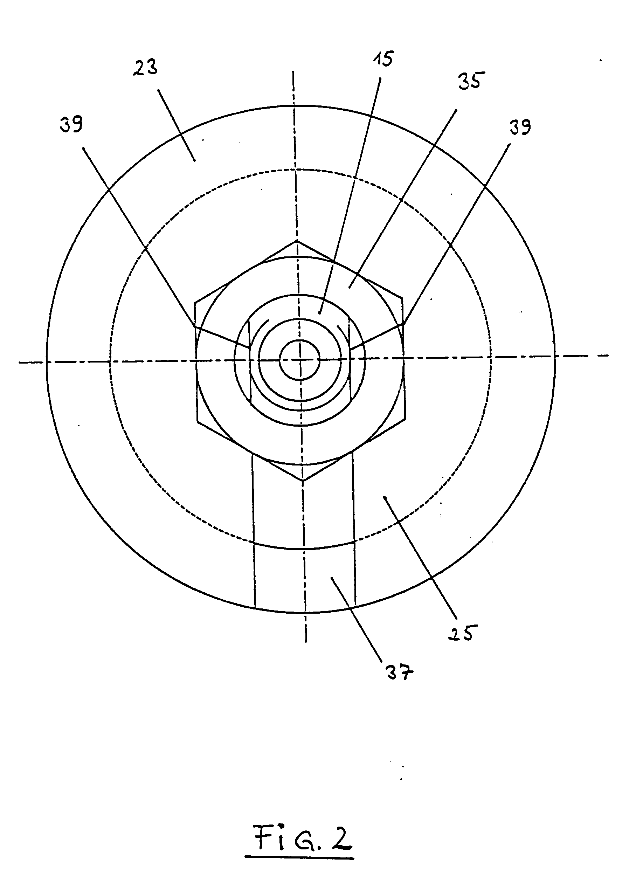

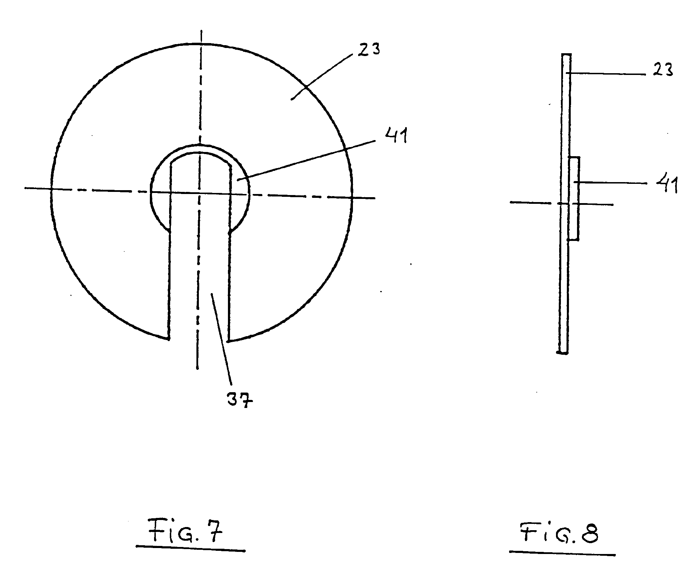

Die Muttern 33 und 35 sind dabei noch soweit von der Abdeckscheibe 21 weggeschraubt, daß die Ringscheibe 23 zwischen der Trennwand 27 und der Gewindemutter 33 in radialer Richtung an die Hülse 15 angesetzt werden kann. Um dies zu ermöglichen, ist die Ringscheibe 23 mit einem Radialschlitz 37 versehen, wie den Figuren 2 und 7 entnehmbar ist. Der Radialschlitz 37 durchsetzt in radialer Richtung den gesamten Ringbereich der Ringscheibe 23, bis zum mittigen Ringloch der Ringscheibe 23. Ist die Ringscheibe 23 auf die Hülse 15 aufgesetzt, überlappt sich ein radialer Außenumfangsereich der Ringscheibe 23 mit dem die Trennwandöffnung 29 umgebenden Bereich der Trennwand 27. Durch Schraubverdrehung der Gewindemutter 33 in Richtung auf die Trennwand 27 zu wird die Trennwand 27 zwischen der Abdeckscheibe 21 und der Ringscheibe 23 festgeklemmt. Danach wird die Kontermutter 35 gegen die Gewindemutter 33 gedreht, um deren unbeabsichtigtes Lockerdrehen zu verhindern.

In Abwandlung zur beschriebenen Ausführungsform könnte der axiale Ansatz 25 statt an der Abdeckscheibe 21 auch an der von der Gewindemutter 23 abliegenden Seite der Ringscheibe 23 angeordnet sein. Eine weitere Möglichkeit besteht darin, den axialen Ansatz 25 auf die Abdeckscheibe 21 und die Ringscheibe 23 aufzuteilen, so daß beide einen entsprechend kürzeren axialen Ansatz aufweisen, wobei beide axialen Ansätze zusammen eine axiale Länge entsprechend der Dicke der Trennwand 27 aufweisen.

Es besteht auch die Möglichkeit, die Abdeckscheibe 21 nicht als relativ dünnes Scheibenelement auszubilden, sondern mit einer größeren axialen Länge auszubilden, die möglicherweise bis zum in Figur 1 linken Ende der Hülse 15 reicht.

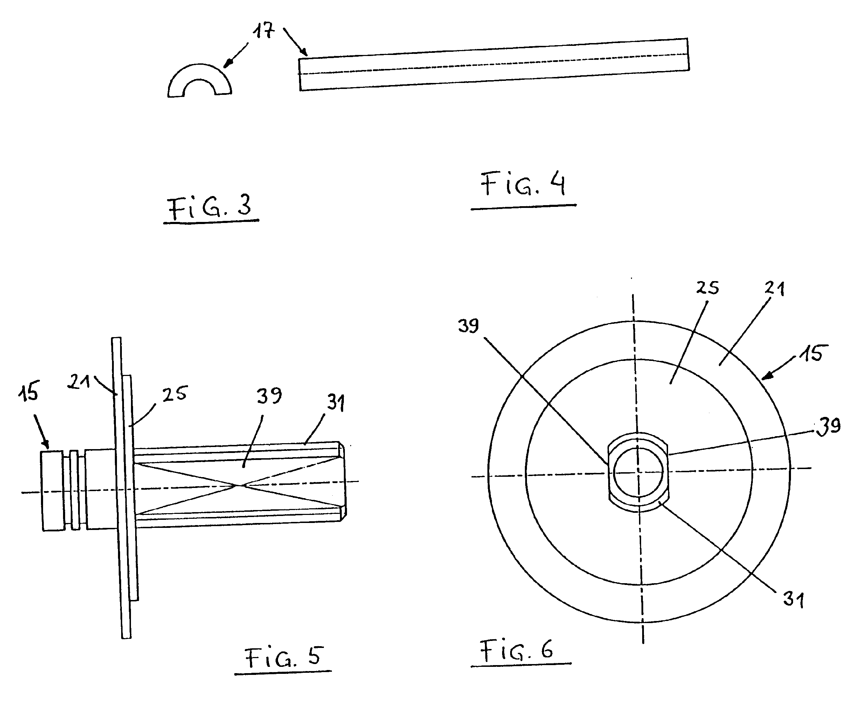

Um das Festschrauben und gegebenenfalls Losschrauben der Ringscheibe 23 zu erleichtern, ist der mit dem Außengewinde 31 versehene Bereich der Hülse 15 auf seinem Außendurchmesser mit zwei diametral gegenüberliegenden Abplattungen 39 versehen. Diese sind am besten in den Figuren 2 und 6 zu sehen. Diese Abplattungen 39 geben die Möglichkeit, während eines Schraubvorgangs die Hülse 15 mit einem geeigneten Werkzeug festzuhalten, beispielsweise mit einem Maulschlüssel.

Figur 2 zeigt eine Stirnseitenansicht der fertigmontierten Kabeldurchführungsvorrichtung, in Figur 1 von rechts aus gesehen. In dieser Figur sieht man die mit dem Radialschlitz 37 versehene Ringscheibe 23, den axialen Ansatz 25, den mit den Abplattungen 39 versehenen Bereich der Hülse 15 und darauf aufgeschraubt die Kontermutter 35.

Die Figuren 3 und 4 zeigen eine der beiden Halbschalen 17 in stirnseitiger Ansicht bzw. Längsseitenansicht.

Figur 5 zeigt eine Längsseitenansicht der Hülse 15 und der einstückig mit der Hülse 15 ausgebildeten Abdeckscheibe 21 mit dem axialen Ansatz 25.

Figur 6 zeigt eine Stirnseitenansicht der Hülse, in Figur 5 von rechts aus gesehen.

Figuren 7 und 8 zeigen eine Stirnseitenansicht bzw. eine Seitenansicht der Ringscheibe 23. Wie insbesondere Figur 8 erkennen läßt, ist die Ringscheibe 23 auf ihrem zu der Gewindemutter 33 weisenden Seite mit einem axialen Vorsprung 41 versehen. Dieser ragt im fertigmontiertien Zustand der Kabeldurchführungsvorrichtung in eine komplementäre axiale Ausnehmung 43 in der zur Ringscheibe 23 weisenden Seite der Gewindemutter 33 hinein. Die axiale Ausnehmung 43 ist im Längsschnittdarstellungsbereich in Figur 1 zu sehen. Der axiale Vorsprung 41 und die axiale Ausnehmung 43 erleichtern eine korrekte radiale Ausrichtung der Ringscheibe 23 nach deren Aufsetzen auf die Hülse 15 und beim Festschrauben der Gewindemutter 33.

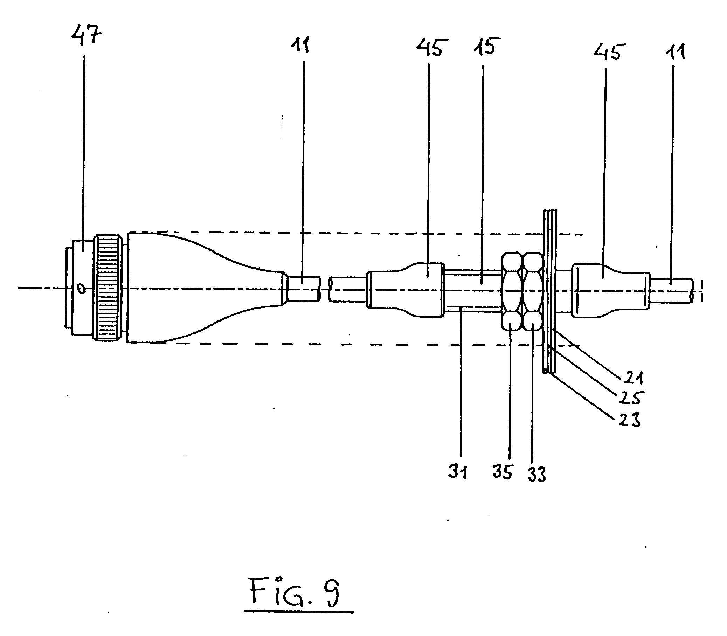

Figur 9 zeigt einen Teil einer Kabelanordnung mit vormontierter erfindungemäßer Kabeldurchführungsvorrichtung. Dabei ist die Kabeldurchführungsvorrichtung um 180° gegenüber der Darstellung in Figur 1 gedreht. Die Übergangsbereiche zwischen dem Kabel 11 und dem auf der Seite der Abdeckscheibe 21 befindlichen Endbereich der Hülse 15 einerseits und dem mit dem Außengewinde 31 versehenen Endbereich der Hülse 15 andererseits sind mit je einem Schrumpfschlauch 45 versehen. Damit wird die Hülse 15 insbesondere dann am Kabel 11 fixiert, wenn die Hülse 15 nicht mit den Halbschalen 17 verlötet ist. Eine Verlötung nur der Halbschalen 17 mit dem freigelegten Schirm des Kabels 11 vorzusehen, hat den Vorteil, daß man die Kabeldurchführungsvorrichtung gegebenenfalls wieder vom Kabel lösen kann, beispielsweise für Reparaturzwecke.

Die vormontierte Kabelanordnung weist an ihren beiden Enden je einen Steckverbinder 47 auf. In Figur 9 ist nur ein Kabelende mit einem solchen Steckverbinder 47 gezeigt. Tatsächlich sind aber an beiden Enden solche Steckverbinder 47 vorgesehen, die allerdings unterschiedliche Form haben können. Die Außenabmessungen der Steckverbinder 47 stehen dabei zu den Abmessungen der Trennwandöffnung 29 in solchem Verhältnis, daß mindestens derjenige Steckverbinder 47 durch die Trennwandöffnung 29 hindurchsteckbar ist, welcher an demjenigen Ende des Kabels 11 montiert ist, das sich von dem mit dem Außengewinde 31 versehenen Ende der Hülse 15 aus erstreckt. In Figur 9 ist dies durch gestrichelte Linien angedeutet, aus denen entnehmbar ist, daß der maximale Außendurchmesser des Steckverbinders 47 kleiner ist als der Durchmesser des axialen Ansatzes 25, welcher dem Durchmesser der Trennwandöffnung 29 entspricht.

Zur Montage der in Figur 9 gezeigten Kabelanordnung am Einsatzort werden die Kontermutter 35 und die Gewindemutter 33 von der Ringscheibe 23 gelöst und wird die Ringscheibe 23 über Ausnutzung ihres Radialschlitzes 37 von der Hülse 15 abgenommen. Die Kabelanordnung wird dann mit dem in Figur 9 gezeigten Steckverbinder 47 voraus durch die in Figur 9 nicht gezeigte Trennwandöffnung 29 hindurchgesteckt, bis die Abdeckscheibe 21 an die Trennwand 27 anstößt und der axiale Ansatz 25 von der Trennwandöffnung 29 aufgenommen ist. Danach wird dann die Ringscheibe 23 wieder an die Hülse 15 angesetzt und mittels der Muttern 33 und 35 in Richtung auf die Abdeckscheibe 21 hin an der Trennwand 27 festgeschraubt.

Danach ist eine sehr gute elektromagnetische Abdichtung zwischen dem Schirm des Kabels 11 und der elektromagnetisch schirmenden Trennwand 27 erreicht. Elektromagnetische Undichtigkeiten, die zur Störeinstrahlung oder zur Störabstrahlung am Ort der Kabeldurchführung fuhren könnten, sind vermieden.

## Patentansprüche

1. Kabeldurchführungsvorrichtung zur elektromagnetisch dichten Durchführung eines geschirmten elektrischen Kabels (11) mit im Durchführungsbereich von einem Kabelmantel (13) freigelegtem elektrischen Schirm durch eine Trennwandöffnung (29),
mit mindestens zwei in radialer Richtung an den freigelegten Bereich des Schirms ansetzbaren, elektrisch leitenden Teilschalen (17), deren Innenprofil an das Außenprofil des Schirms angepaßt ist,
und mit einer Befestigungseinrichtung (21, 23, 33, 35) zum Befestigen der Kabeldurchführungsvorrichtung in der Trennwandöffnung (29),
**dadurch gekennzeichnet**,
daß das Außenprofil der Teilschalen (17) im wesentlichen mit dem Außenprofil des Kabelmantels (13) übereinstimmt,
daß die Teilschalen (17) von einer elektrisch leitenden Hülse (15) umgeben sind, deren Innenprofil derart an das Außenprofil des Kabelmantels (11) und der Teilschalen (17) angepaßt ist, daß die Hülse (15) auf dem Kabelmantel (13) und auf den an den freigelegten Bereich des Schirms angesetzten Teilschalen (17) in Kabellängsrichtung verschiebbar ist,
daß auf dem Außenumfang der Hülse (15) beidseits der axialen Trennwandposition je ein Scheibenelement (21, 23) angeordnet ist, von denen mindestens eines (23) als Ringscheibe ausgebildet ist, die zum radialen Aufsetzen auf die Hülse (15) mit einem Radialschlitz (37) versehen ist, dessen Breite mindestens so groß ist wie die Außenabmessung des die Ringscheibe (23) tragenden Bereichs der Hülse (15),
daß die Hülse (15) mindestens auf derjenigen axialen Seite der Trennwandposition, auf welcher die Ringscheibe (23) vorgesehen ist, mit einem Außengewinde (31) für mindestens eine Gewindemutter (33) versehen ist,
und daß die Außenabmessungen der beiden Scheibenelemente (21, 23) größer und die Außenabmessungen mindestens der mit Außengewinde (31) versehenen axialen Seite der Hülse (15) einschließlich der darauf geschraubten Gewindemutter (33) kleiner als die Abmessungen der Trennwandöffnung (29) sind.

2. Kabeldurchführungsvorrichtung nach Anspruch 1, für ein rundes Kabel (11),
**dadurch gekennzeichnet**,
daß die Teilschalen (17) im an den freigelegten Schirm angesetzten Zustand zusammen einen Ringzylinder bilden und daß die Hülse (15) als Ringzylinder ausgebildet ist.

3. Kabeldurchführungsvorrichtung nach Anspruch 1 oder 2,
**dadurch gekennzeichnet**,
daß als Teilschalen (17) zwei Halbschalen vorgesehen sind.

4. Kabeldurchführungsvorrichtung nach einem der Ansprüche 1 bis 3,
**dadurch gekennzeichnet**,
daß eines der beiden Scheibenelemente (21) mit der zugehörigen axialen Seite der Hülse (15) einstückig ausgebildet ist.

5. Kabeldurchführungsvorrichtung nach einem der Ansprüche 1 bis 4,
**dadurch gekennzeichnet**,
daß eines der Scheibenelemente (21) auf seiner zur Trennwand (27) weisenden Seite mit einem axialen Ansatz (25) ausgebildet ist, dessen axiale und radiale Abmessungen derart sind, daß der axiale Ansatz (25) die Trennwandöffnung (29) ausfüllend in diese einsetzbar ist.

6. Kabeldurchführungsvorrichtung nach Anspruch 5,
**dadurch gekennzeichnet**,
daß beide Scheibenelemente (21, 23) mit je einem axialen Ansatz ausgebildet sind, die beide gemeinsam die Trennwandöffnung ausfüllen.

7. Kabeldurchführungsvorrichtung nach einem der Ansprüche 1 bis 6,
**dadurch gekennzeichnet**,
daß die Ringscheibe (23) auf ihrer zur Gewindemutter (33) weisenden axialen Seite mit einem axialen Vorsprung (41) versehen ist, der in eine komplementäre axiale Ausnehmung (43) auf der zur Ringscheibe (23) weisenden Seite der Gewindemutter (33) hineinpaßt.

8. Kabelbaugruppe mit einem elektrischen Kabel (11) und einem elektrischen Verbinder (47) an jedem Kabelende, wobei das Kabel (11) einen elektrischen Schirm und einen darüber befindlichen Kabelmantel (13) aufweist,
**dadurch gekennzeichnet**,
daß an einer zwischen den Kabelenden liegenden Kabelstelle der Schirm von dem Kabelmantel (13) freigelegt und das Kabel (11) an dieser Stelle mit einer Kabeldurchführungsvorrichtung gemäß einem der Ansprüche 1 bis 7 versehen ist
und daß mindestens derjenige elektrische Verbinder (47), durch die Trennwandöffnung (29) hindurchführbar ist, welcher auf der gleichen Trennwandseite wie die Ringscheibe (23) vorgesehen ist.

9. Kabelbaugruppe nach Anspruch 8,
**dadurch gekennzeichnet,**
daß auf die axialen Enden der Hülse (15) und auf die an diese axialen Enden anschließenden Bereiche des Kabels (11) je ein Schrumpfschlauch (45) aufgebracht ist.

10. Kabelbaugruppe nach Anspruch 8 oder 9,
**dadurch gekennzeichnet**,
daß die Teilschalen (17) mit dem freigelegten Schirm verlötet sind.

11. Kabelbaugruppe nach Anspruch 10,
**dadurch gekennzeichnet**,
daß die Hülse (15) mit den Teilschalen (17) verlötet ist.

## Claims

1. A cable bushing for passing a shielded electrical cable (11), having its shield freed from a cable jacket (13) in the bushing portion, through a partition opening (29) in electromagnetically tight manner, comprising at least two electrically conductive partial shells (17) adapted to be radially attached to the exposed portion of the shield and having their inner profile adapted to the outer profile of the shield,
and comprising a mounting means (21, 23, 33, 35) for mounting the cable bushing in the partition opening (29),
**characterized** in
that the outer profile of the partial shells (17) is substantially equal to the outer profile of the cable jacket (13),
that the partial shells (17) are surrounded by an electrically conductive sleeve (15) whose inner profile is adapted to the outer profile of the cable jacket (13) and the partial shells (17) such that the sleeve (15) is slidable in the longitudinal direction of the cable on the cable jacket (13) and on the partial shells (17) applied to the exposed portion of the shield,
that one disc member (21, 23) each is disposed on the outer circumference of the sleeve (15), on both sides of the axial partition position, at least one of said disc members (23) being in the form of an annular disc provided with a radial slot (37) for radial application onto the sleeve (15), said slot (37) having a width that is at least as large as the outer dimensions of the portion of the sleeve (15) carrying the annular disc (23),
that the sleeve (15), at least on that axial side of the position of the partition where the annular disc (23) is provided, is provided with an external thread (31) for at least one threaded nut (33),
and in that the outer dimensions of the two disc members (21, 23) are greater, and the outer dimensions at least of the axial side of the sleeve (15) provided with the external thread (31), inclusively of the threaded nut (33) threaded thereonto, are smaller than the dimensions of the partition opening (29).

2. A cable bushing according to claim 1, for a round cable (11),
characterized in that the partial shells (17), in their condition applied to the exposed shield, together form an annular cylinder, and in that the sleeve (15) is designed as an annular cylinder.

3. A cable bushing according to claim 1 or 2,
characterized in that the partial shells (17) are provided in the form of two half-shells.

4. A cable bushing according to any one of claims 1 to 3,
characterized in that one of the two disc members (21) is formed integrally with the associated axial side of the sleeve (15).

5. A cable bushing according to any one of claims 1 to 4,
characterized in that one of the disc members (21), on its side facing the partition (27), is formed with an axial attachment (25) having such axial and radial dimensions that said axial attachment (25) can be inserted into the partition opening (29) so as to fill out the latter.

6. A cable bushing according to claim 5,
characterized in that both disc members (21, 23) are formed with one axial attachment each, which both together fill out the partition opening.

7. A cable bushing according to any one of claims 1 to 6,
characterized in that the annular disc (23), on its axial side facing the threaded nut (33), is provided with an axial projection (41) fitting into a complementary axial recess (43) on the side of the threaded nut (33) facing towards the annular disc (23).

8. A cable assembly comprising an electric cable (11) and an electrical connector (47) on each cable end, the cable (11) having an electric shield and a cable jacket (13) located thereabove,
characterized in that the cable is freed from the cable jacket (13) at a location of the cable between the cable ends, and that the cable (11) at that location is provided with a cable bushing according to any one of claims 1 to 7,
and that at least that electrical connector is adapted to be passed through the partition opening (29) that is located on the same partition side as the annular disc (23).

9. A cable assembly according to claim 8,
characterized in that a flexible shrinkdown tube (45) is applied to each one of the axial ends of the sleeve (15) and to the portions of the cable (11) adjacent these axial ends.

10. A cable assembly according to claim 8 or 9,
characterized in that the partial shells (17) are soldered to the exposed shield.

11. A cable assembly according to claim 10,
characterized in that the sleeve (15) is soldered to the partial shells (17).

## Revendications

1. Dispositif de traversée de câble pour la traversée étanche sur le plan électromagnétique à travers une ouverture (29) d'une cloison de séparation, d'un câble électrique blindé (11) doté d'un blindage électrique dénudé d'une enveloppe de câble (13) dans la région du passage,
comprenant au moins deux coques partielles (17) conductrices de l'électricité et pouvant être mises en place en direction radiale contre la région du blindage dénudé, dont le profil intérieur est ajusté au profil extérieur de l'écran,
et comprenant des moyens de fixation (21, 23, 33, 35) pour fixer le dispositif de traverse et de câble dans l'ouverture (29) de la cloison de séparation,
caractérisé en ce que le profil extérieur des coques partielles (17) coïncide sensiblement avec le profil extérieur de l'enveloppe de câble (13),
en ce que les coques partielles (17) sont entourées par un fourreau (15) conducteur de l'électricité, dont le profil intérieur est ajusté au profil extérieur de l'enveloppe de câble (11) et des coques partielles (17) de telle façon que le fourreau (15) est susceptible d'être déplacé sur l'enveloppe de câble (13) et sur les coques partielles (17) appliquées sur la région dénudée du blindage, dans la direction longitudinale du câble,
en ce qu'il est prévu des éléments en forme de disque (21, 23), agencés sur la périphérie extérieure du fourreau (15) de part et d'autre de la position axiale de la cloison de séparation, l'un au moins (23) desdits éléments en forme de disque étant réalisés sous la forme d'un disque annulaire qui est pourvu d'une fente radiale (37) en vue de sa mise en place radiale sur le fourreau (15), la largeur de ladite fente étant au moins aussi élevée que la dimension extérieure de la région du fourreau (15) qui porte le disque annulaire (23),
en ce que le fourreau (15) est pourvu, au moins sur le côté axial de la position de la cloison de séparation sur lequel est prévu le disque annulaire (23), d'un filetage extérieur (31) pour au moins un écrou taraudé (33), et
en ce que les dimensions extérieures des deux éléments en forme de disque (21, 23) sont supérieures aux dimensions de l'ouverture (29) dans la cloison de séparation, et les dimensions extérieures du côté axial du fourreau (15) doté du filetage extérieur (31), y compris l'écrou taraudé (33) vissé sur celui-ci, sont inférieurs aux dimensions de l'ouverture (29) de la cloison de séparation.

2. Dispositif de passage de câble selon la revendication 1, destiné à un câble rond (11), caractérisé en ce que les coques partielles (17) forment ensemble un cylindre annulaire, dans un état appliqué sur le blindage dénudé, et en ce que le fourreau (15) est réalisé sous la forme d'un cylindre annulaire.

3. Dispositif de passage de câble selon l'une ou l'autre des revendications 1 et 2, caractérisé en ce que l'on prévoit deux demi-coques en tant que coques partielles (17).

4. Dispositif de passage de câble selon l'une quelconque des revendications 1 à 3, caractérisé en ce que l'un des deux éléments en forme de disque (21) est réalisé d'une seule pièce avec le côté axial associé du fourreau (15).

5. Dispositif de passage de câble selon l'une quelconque des revendications 1 à 4, caractérisé en ce que l'un des éléments en forme de disque (21) est réalisé avec un talon axial (25) sur son côté dirigé vers la cloison de séparation (27), les dimensions axiale et radiale dudit talon étant telles que le talon axial (25) est susceptible d'être mis en place dans l'ouverture (29) de la paroi de séparation en remplissant celle-ci.

6. Dispositif de passage de câble selon la revendication 5, caractérisé en ce que les deux éléments en forme de disque (21, 23) sont réalisés chacun avec un talon axial, qui remplissent tous deux conjointement l'ouverture de la cloison de séparation.

7. Dispositif de passage de câble selon l'une quelconque des revendications 1 à 6, caractérisé en ce que le disque annulaire (23) est pourvu d'une saillie axiale (41) sur son côté axial dirigé vers l'écrou taraudé (33), ladite saillie pénétrant avec ajustement un évidement axial complémentaire (43) sur le côté de l'écrou taraudé (33) dirigé vers le disque annulaire (23).

8. Composant à câble comprenant un câble électrique (11) et un connecteur électrique (47) à chaque extrémité du câble, le câble (11) comportant un blindage électrique et une enveloppe de câble (13) se trouvant par dessus ledit blindage, caractérisé en ce que le blindage est dénudé de l'enveloppe de câble (13) à un emplacement du câble situé entre les extrémités de celui-ci, et en ce que le câble (11) est pourvu à cet emplacement d'un dispositif de traversée de câble selon l'une quelconque des revendications 1 à 7,
et en ce qu'au moins celui des connecteurs électriques (47) qui est prévu du même côté de la cloison de séparation que le disque annulaire (23) est susceptible d'être passé à travers l'ouverture (29) de la cloison de séparation.

9. Composant à câble selon la revendication 8, caractérisé en ce que sur les extrémités axiales du fourreau (15) et sur les régions du câble (11) adjacentes à ces extrémités axiales est appliqué un tuyau rétractable (45) respectif.

10. Composant à câble selon l'une ou l'autre des revendications 8 et 9, caractérisé en ce que les coques partielles (17) sont soudées au blindage dénudé.

11. Composant à câble selon la revendication 10, caractérisé en ce que le fourreau (15) est soudé aux coques partielles (17).
